# FASCICULE DE BREVET EUROPEEN

(11) **EP 1 774 637 B1**
(45) Date de publication et mention de la délivrance du brevet: **21.11.2012**
(21) Numéro de dépôt: 05731012.0
(22) Date de dépôt: 24.02.2005
(51) Int. Cl.: H02K 9/06

(54) **Ensemble rotorique dont au moins un espace intergriffes est obture par le ventilateur**
Rotorbaugruppe, worin mindestens ein Raum zwischen Klammern durch den Lüfter verschlossen wird
Rotor assembly, in which at least one inter-claw space is sealed by the fan

(30) Priorité: 27.02.2004 FR 0402030
(43) Date de publication de la demande: 18.04.2007
(73) Titulaire: VALEO EQUIPEMENTS ELECTRIQUES MOTEUR, 94017 Créteil Cedex (FR)
(72) Inventeur: VASILESCU, Claudiu, F-75020 Paris (FR)
(74) Mandataire: de Lambilly Delorme, Marie Pierre
(86) Numéro de dépôt international: PCT/FR2005/000434
(87) Numéro de publication internationale: WO 2005/091465

(56) Documents cités:
- EP-A- 0 779 697
- EP-A- 1 122 864
- EP-A- 1 443 627
- US-A- 5 793 143

## Description

### Domaine de l'invention

L'invention concerne en général les machines électriques tournantes notamment les alternateurs de véhicule automobile.

Plus précisément, l'invention concerne selon un premier aspect un ensemble rotorique notamment pour alternateur de véhicule automobile, cet ensemble étant monté rotatif autour d'un axe de rotation et comprenant deux roues polaires à griffes séparées par un espacement axial et disposées en regard l'une de l'autre, chaque roue comprenant un flasque sensiblement perpendiculaire à l'axe et des griffes s'étendant axialement à partir du flasque vers l'autre roue, les griffes d'une même roue étant solidaires du flasque par des bases respectives mutuellement séparées par des espaces périphériques, l'ensemble comprenant au moins un ventilateur plaqué sur une face axiale du flasque d'une des roues opposée à l'autre roue.

### Etat de la technique

Des ensembles de ce type sont connus de l'art antérieur, par exemple par le document EP A 0 515 259 (US A 5 270 605) et sont très largement utilisés dans les alternateurs compacts à ventilation interne de véhicules automobiles. Dans une forme de réalisation décrite dans le document US 5 973 143, le ventilateur porte des reliefs axiaux s'étendant entre les griffes et conformés pour porter des aimants permanents. Le document EP 1 443 627 représente un état de la technique au sens de l'Article 54(3) CBE.

### Objet de l'invention

Un objectif constant de la recherche dans le domaine des alternateurs est de diminuer le bruit produit par la rotation de l'ensemble rotorique.

Cet objectif est atteint, selon l'invention avec l'objet la revendication 1.

Le relief axial, dans un mode de réalisation, est conformé de façon à servir de clip de fixation du ventilateur sur la roue polaire correspondante.

Dans un autre mode de réalisation, le plateau comprend une partie pleine de forme sensiblement annulaire et une zone de la partie pleine constitue la partie d'obturation en supplément de la partie d'obturation à relief axial.

En outre, les griffes présentent des faces radialement extérieures définissant le diamètre de l'ensemble rotorique, la partie pleine présentant un diamètre extérieur égal ou inférieur au diamètre de l'ensemble rotorique.

Alternativement, la partie d'obturation du plateau fait saillie radialement vers l'extérieur à partir de la partie pleine.

Dans encore un autre mode de réalisation, la partie pleine présente un bord radialement extérieur dans lequel au moins une zone évidée est creusée, la partie d'obturation s'étendant à partir d'un fond de la zone évidée.

Ladite partie d'obturation étant inclinée axialement à partir de la partie pleine du plateau du côté des griffes, le ventilateur comprend dans un mode de réalisation une pale s'étendant au moins en partie sur la partie d'obturation.

Dans un premier mode de réalisation, le ventilateur est moulé.

Dans un second mode de réalisation, le ventilateur est en tôle pliée.

Dans ce second mode de réalisation également, une partie dite d'obturation du plateau vient obturer axialement au moins un des espaces périphériques.

Selon une variante de réalisation, le plateau comprend une partie pleine de forme sensiblement annulaire, une zone de cette partie pleine constituant la partie d'obturation en supplément de la partie d'obturation à relief axial.

Selon une autre variante de réalisation, le plateau comprend une partie pleine de forme sensiblement annulaire, ladite partie d'obturation du plateau étant constituée d'une languette faisant saillie radialement vers l'extérieur à partir de la partie pleine.

Dans ce cas, la languette est inclinée axialement à partir de la partie pleine du côté des griffes.

Selon encore une autre variante de réalisation, le plateau comprend des parties de support des pales découpées à la périphérie de ce plateau, une de ces parties de support constituant la partie d'obturation en supplément de la partie d'obturation à relief axial.

En outre, le ventilateur peut comprendre un second plateau plaqué sur le plateau et supportant des pales, l'un du plateau et du second plateau pouvant comprendre au moins une partie d'obturation à relief axial selon l'invention.

Alternativement, le plateau et le second plateau comprennent chacun au moins une partie d'obturation à relief axial selon l'invention.

Dans ce cas, le plateau et le second plateau peuvent comprendre des parties d'obturation respectives complémentaires obturant un même espace périphérique.

Avantageusement, le plateau est plaqué sur la face axiale du flasque de la roue polaire, le second plateau étant plaqué d'un côté du plateau opposé à ladite face axiale.

Inversement, le second plateau peut être plaqué sur la face axiale du flasque de la roue polaire, le plateau étant plaqué d'un côté du second plateau opposé à ladite face axiale.

Dans tous les cas, l'espace périphérique peut être partiellement ou totalement obturé. De même, tous les espaces périphériques ou seulement certains d'entre eux peuvent être obturés.

Selon un second aspect, l'invention porte sur un alternateur ou alterno-démarreur de véhicule automobile, comprenant un ensemble rotorique présentant les caractéristiques décrites ci-dessus.

### Brève description des dessins

D'autres caractéristiques et avantages de l'invention ressortiront clairement de la description qui en est faite ci-dessous, à titre indicatif et nullement limitatif, en référence aux figures annexées, parmi lesquelles:
- la figure 1 est une vue en perspective d'un ensemble rotorique selon l'art antérieur,
- la figure 2 est une vue en perspective d'un ventilateur d'un ensemble rotorique conforme à un premier mode de réalisation de l'invention, dans lequel le ventilateur est moulé,

- la figure 3 est une vue en perspective selon la flèche III de la figure 2,
- la figure 4 est une vue en perspective du ventilateur des figures 2 et 3 monté sur une roue polaire de l'ensemble rotorique,
- la figure 5 est une vue en perspective selon la flèche v de la figure 4,
- les figures 6 à 9 sont des vues équivalentes aux figures 2 à 5, pour un ensemble rotorique conforme à une variante du premier mode de réalisation,
- la figure 10 est une vue en perspective d'un ventilateur d'un ensemble rotorique conforme à un second mode de réalisation de l'invention, dans lequel le ventilateur est en tôle pliée,
- la figure 11 est une vue en coupe partielle dans un plan radial d'une roue polaire sur laquelle est plaquée une variante du ventilateur de la figure 10,
- la figure 12 est une vue axiale d'un ensemble rotorique conforme à une variante du second mode de réalisation de l'invention, et
- la figure 13 est une vue en perspective de la roue polaire de la figure 1.

### Description de modes de réalisation de l'invention

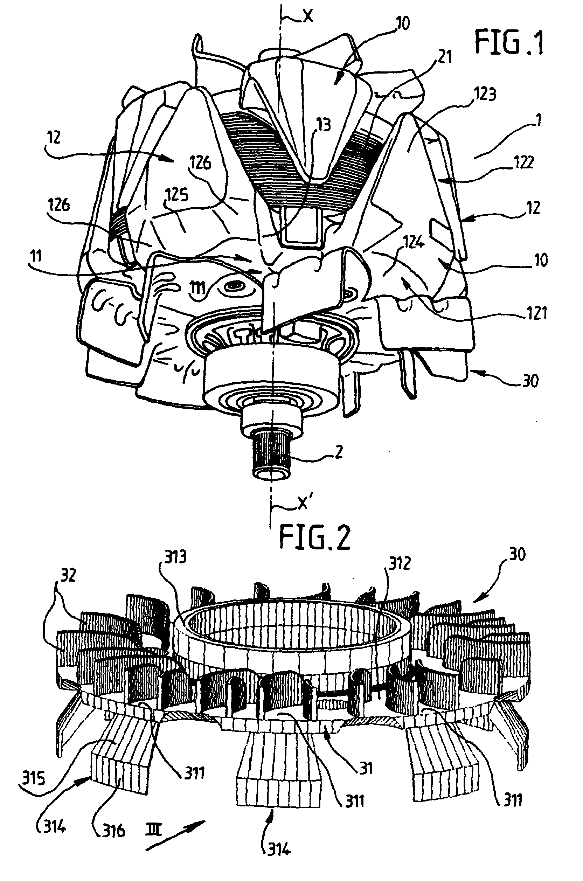

La figure 1 représente un ensemble rotorique 1 pour alternateur de véhicule automobile, rotatif autour d'un axe de rotation X-X'. Cet ensemble est emmanché à force sur un arbre 2 et rendu solidaire de celui-ci en rotation autour de l'axe X-X' par des cannelures portées par cet arbre 2, ces cannelures coopérant avec des rainures ménagées dans l'ensemble rotorique 1.

L'ensemble rotorique 1 comprend deux roues polaires à griffes 10 solidaires de l'arbre 2 et séparées par un espacement axial, un noyau (non représenté) enfermé entre les deux roues polaires 10, et une bobine inductrice 21 enroulée sur le noyau.

Les roues polaires 10 présentent chacune une forme générale en disque centré sur l'axe X-X' et sont disposées en regard l'une de l'autre. Chaque roue 10, comme on le voit sur la figure 1, comprend un flasque 11 en forme de disque centré sur l'axe X-X' et sensiblement perpendiculaire à cet axe, et des griffes 12 disposées en cercle à la périphérie extérieure du flasque 11, et régulièrement espacées le long de cette périphérie.

Le flasque 11 est percé par un alésage central recevant l'arbre 2.

Les griffes 12 sont venues de matière avec le flasque 11 et s'étendant axialement à partir du flasque 11 vers l'autre roue polaire 10. Les deux roues 10 portent le même nombre de griffes 12, les griffes 12 d'une roue étant angulairement décalées par rapport à celles de l'autre roue, de telle sorte que les griffes des deux roues s'interpénètrent, une griffe d'une roue polaire s'enfonçant axialement entre deux griffes de l'autre roue polaire.

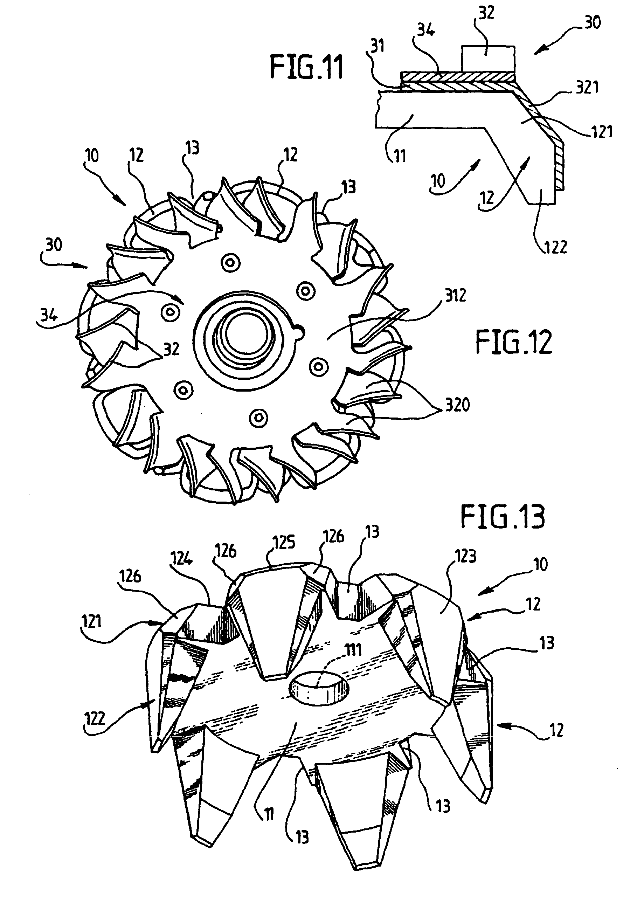

Les griffes 12 (figure 13) d'une même roue 10 sont solidaires du flasque 11 par des bases 121 respectives, ces bases faisant saillie radialement à partir d'un bord extérieur du flasque 11. Les bases 121 sont mutuellement séparées par des espaces périphériques 13 présentant, perpendiculairement à l'axe de rotation X-X', des formes générales de secteur d'anneau. En suivant la périphérie du flasque 11, on rencontre donc alternativement un espace 13 et une base 121.

Les griffes 12 comprennent encore chacune une tête, appelée également dent, globalement de forme trapézoïdale 122 prolongeant la base 121 axialement vers l'autre roue 10.

Les têtes 122 présentent des faces radialement extérieures 123 s'inscrivant dans un cylindre coaxial à l'axe de rotation X-X' et définissant le diamètre de l'ensemble rotorique 1. Ces faces 123, considérées dans des plans perpendiculaires à l'axe de rotation X-X', présentent des largeurs respectives qui vont en rétrécissant depuis la base 121 vers la roue polaire opposée 10. Ici les têtes 122 ont une forme analogue à celles décrites dans le document EP 0 515 259, auquel on se reportera pour plus de précisions. Les têtes présentent donc des chanfreins périphériques et des chanfreins antibruit 126 décrits ci-après.

L'ensemble rotorique 1 comprend au moins un ventilateur 30 plaqué sur une d'éxtrémité axiale 111 du flasque 11 d'une des roues 10, ladite face étant tournée dans un sens opposé à l'autre roue 10.

La base 121 (figure 13) est délimitée du côté de la face axiale 111 par une facette droite 124 s'étendant dans le même plan que ladite face axiale, une facette oblique 125 reliant la facette droite 124 à la face extérieure 123 de la tête 122, et deux chanfreins 126 encadrant latéralement la facette oblique 125 et reliant eux aussi la facette droite 124 à la face extérieure 123. La facette obliqué 125 et les chanfreins 126 sont inclinés axialement vers la roue polaire 10 opposée à partir de la facette droite 124. Les chanfreins 126 sont légèrement inclinés latéralement vers les griffes 12 adjacentes.

Selon l'invention, une partie de ce ventilateur 30 obture au moins partiellement un des espaces périphériques 13 suivant une direction axiale, c'est-à-dire parallèlement à l'axe de rotation X-X'.

On entend ici par obturer le fait que ladite partie de ventilateur vienne fermer l'espace périphérique 13 d'un côté axial opposé à l'autre roue 10. Ladite partie de ventilateur s'étend ainsi entre les deux bases 121 encadrant l'espace périphérique 13, de l'une à l'autre.

Elle est plaquée contre les facettes droites 124 de ces bases ou, au minimum s'étend à proximité immédiate de ces facettes droites, de telle sorte que l'interstice entre ladite partie de ventilateur et les bases soit très faible au regard des dimensions de l'espace périphérique 13. Par ailleurs, ladite partie de ventilateur s'étend sur la plus grande partie de la hauteur radiale de l_{'}espace périphérique 13.

Le ventilateur 30 comprend un plateau 31 sensiblement perpendiculaire à l'axe de rotation X-X' et fixé au flasque 11, et des pales 32 faisant saillie à partir du plateau 31 en direction opposée à la roue 10. La fixation au flasque est réalisée par exemple par rivetage et/ou collage

Dans un premier mode de réalisation correspondant aux figures 2 à 9, le ventilateur 30 est moulé. Il est typiquement constitué de matière plastique, mais peut également être constitué d'autres matériaux.

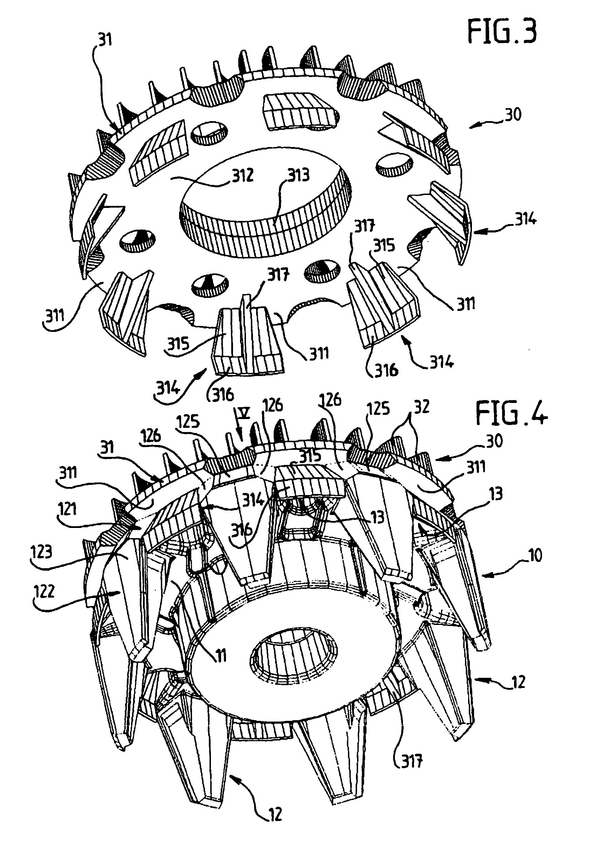

Comme on le voit sur les figures 2 et 3, des parties dites d'obturation 311 du plateau 31 viennent obturer axialement les espaces périphériques 13.

Bien entendu, il est possible que les parties d'obturation 311 du plateau 31 n'obturent pas tous les espaces périphériques 13, mais seulement certains d'entre eux.

Comme on le voit sur les figures 2 et 3, le plateau 31 comprend une partie pleine 312 de forme sensiblement annulaire, et un rebord 313 d'orientation axiale se dressant sur un bord radialement intérieur de la partie pleine. Le rebord 313, de forme annulaire délimite une ouverture centrale. La figure 4 montre que la partie pleine 312 présente un diamètre extérieur égal ou inférieur au diamètre de l'ensemble rotorique. Le bord radialement extérieur de la partie pleine 312 arrive, suivant une direction radiale, au niveau des facettes obliques 125.

Les pales 32 font saillie axialement sur une face du plateau 31 opposée au flasque 11. Dans les exemples de réalisation des figures 2 à 9, ces pales présentent des formes allongées suivant une direction longitudinale courbe allant généralement de l'intérieur vers l'extérieur du ventilateur. Ces pales 32 présentent une extrémité longitudinale extérieure s'arrêtant sur le bord radialement extérieur de la partie pleine 312.

Les parties d'obturation 311 sont constituées par des zones de cette partie pleine 312, ces zones étant régulièrement espacées le long du bord extérieur de la partie pleine, et étant axialement dans le prolongement des espaces périphériques 13.

Rien ne sépare ces parties d'obturation 311 du reste de la partie pleine 312.

Selon une caractéristique de l'invention ces parties d'obturation 311 portent chacune un relief axial 314 s'étendant à partir du plateau 31 entre les griffes 12.

On voit sur la figure 3 que ces reliefs 314 présentent chacun la forme d'une languette mince, solidaire d'une face du plateau 31 tournée vers le flasque 11, et s'étendant à partir d'un point de cette face situé radialement à distance du bord extérieur de la partie pleine 312.

La languette comprend un premier pan 315 s'étendant à partir de la partie pleine 312 selon une caractéristique de l'invention en oblique, axialement et radialement vers l'extérieur, et un second pan 316 prolongeant le premier parallèlement à l'axe de rotation X-X'.

Le premier pan 315 présente une légère courbure de concavité tournée vers l'axe de rotation X-X' et obture l'espace situé entre les chanfreins 126 des deux griffes 12 encadrant l'espace périphérique dans lequel la languette est engagée.

Le second pan 316 s'inscrit dans le prolongement des faces extérieures 123 des deux griffes, et obture ici partiellement l'espace séparant ces deux faces extérieures, sur une courte longueur axiale.

Chaque relief 314 porte une nervure axiale 317 de rigidification, s'étendant à partir du plateau 31 le long des premier et second pans 315 et 316. Les pans s'étendent axialement en direction opposée aux pales 32.

Bien entendu, il est possible de faire en sorte que seules certaines parties d'obturation portent des reliefs axiaux.

On notera que le premier pan 315 des reliefs 314 va en s'élargissant à partir du plateau 31 jusqu'au deuxième pan. Considérée périphériquement à l'axe X-X', le premier pan présente une largeur relativement plus faible près de la partie pleine 312 et relativement plus grande à la jonction avec le deuxième pan 316. De ce fait, les reliefs axiaux 314 peuvent servir de clips de fixation du ventilateur 30 sur la roue polaire 10 correspondante.

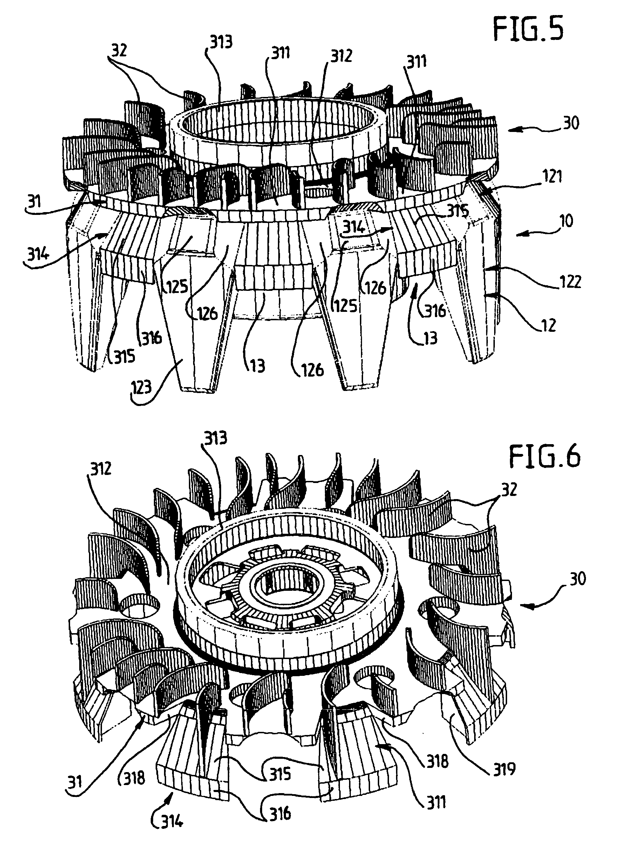

Dans une variante de réalisation représentée sur les figures 6 à 9, les parties d'obturation 311 sont constituées par les reliefs axiaux 314, qui ont alors une double fonction à savoir d'obturation et de clip de fixation.

Dans ce cas, les zones 318 de la partie pleine 312 situées axialement dans le prolongement des reliefs axiaux 314 sont évidées. Ces zones constituaient les parties d'obturation 311 sur les figures 2 à 5. Ces zones évidées 318 sont creusées à partir du bord extérieur de la partie pleine 312 et présentent chacune une forme générale en U. Elles sont délimitées par un fond et deux côtés latéraux divergeant à partir du fond jusqu'au bord extérieur de la partie pleine 312.

Les premiers pans 315 des reliefs axiaux 314 s'étendent donc chacun à partir du fond d'une zone évidée 318 et sont inclinés à partir du fond vers l'extérieur et vers les griffes 12.

De façon avantageuse, on peut prévoir une pale prolongée 32 s'étendant sur le premier pan 315 de chaque relief axial 314. Une extrémité longitudinale radialement intérieure de cette pale est située sur la partie pleine 312. L'extrémité longitudinale opposée de la pale prolongée est située à la jonction entre les premier et second pans 315 et 316.

On peut ainsi transformer un ventilateur de type centrifuge tel que celui représenté sur les figures 2 à 5, en un ventilateur de type hélico-centrifuge. Un ventilateur centrifuge aspire l'air parallèlement à son axe de rotation et refoule l'air perpendiculairement à cet axe. Un ventilateur hélico-centrifuge aspire l'air parallèlement à son axe de rotation et refoule l'air suivant une direction inclinée par rapport à cet axe, l'angle d'inclinaison étant supérieur à zéro et inférieur à 90°.

On notera que dans cette variante de réalisation la nervure de rigidification de la figure 3 est remplacée par trois voiles 319 formant un caisson de rigidification du relief axial 314.

Un voile central 319 s'étend parallèlement à l'axe de rotation X-X' à partir du fond de la zone évidée 318. Deux voiles latéraux 319 relient des bords latéraux opposés du voile central 319 tournés vers les deux griffes encadrant le relief axial 314 à des bords latéraux des premier et second pans tournés eux aussi vers les deux griffes.

Le voile central est relativement moins large que les premier et second pans 315 et 316, de telle sorte que les voiles latéraux divergent à partir du voile central jusqu'aux premier et second pans. Considéré en coupe perpendiculairement à l'axe de rotation X-X', le caisson de rigidification présente donc des sections trapézoïdales dont le voile central constitue la petite base. Les voiles latéraux permettent d'épouser la forme des chanfreins 126 des griffes et sont en variante prolongés à cet effet.

Dans une variante de réalisation, non représentée, le plateau 31 comprend une partie pleine 312 de forme sensiblement annulaire, les parties d'obturation 311 faisant saillie radialement vers l'extérieur par rapport à la partie pleine 312.

Dans ce cas, la partie pleine 312 présente un diamètre extérieur plus faible que sur les figures 2 à 9, correspondant sensiblement au diamètre du flasque 11.

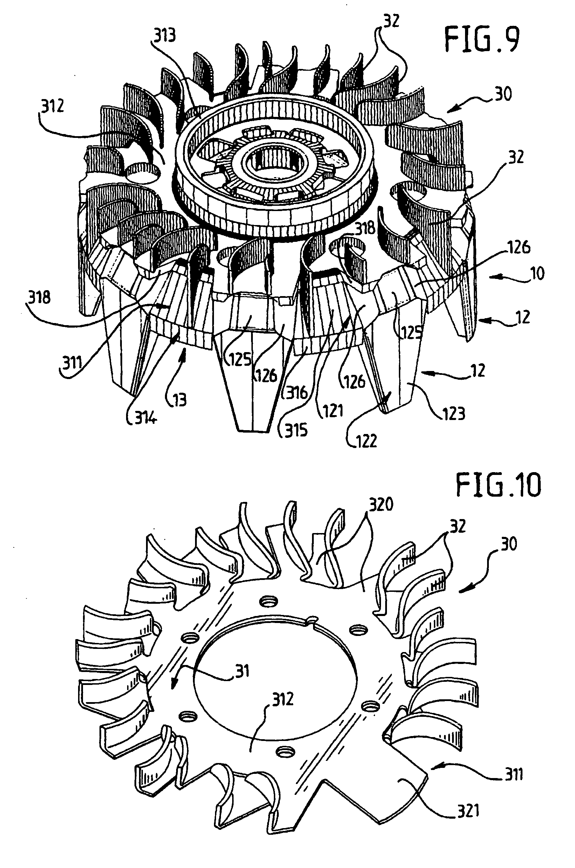

Dans un second mode de réalisation correspondant aux figures 10 à 12, le ventilateur 30 est en tôle pliée. Il peut donc être fixé par soudage sur le flasque 11. En variante la fixation est réalisée par rivetage.

De même que précédemment, le plateau 31 de ce ventilateur comprend une partie pleine annulaire 312 et des parties de support de pale 320 découpées à la périphérie de ce plateau.

Ces parties de support 320 s'étendent vers l'extérieur à partir d'un bord périphérique extérieur de la partie pleine 312. Elles présentent chacune une forme générale triangulaire, dont un des côtés constitue un bord commun avec le partie pleine 312 et dont un des sommets pointe dans une direction radialement extérieure. La pale 32 s'étend le long d'un côté du triangle, sensiblement entre ledit sommet pointant vers l'extérieur et le bord extérieur de la partie pleine 312.

De même que dans le premier mode de réalisation, une zone de cette partie pleine 312 peut constituer la partie d'obturation 311.

Dans l'exemple de réalisation représenté sur les figures 10 et 11, la partie d'obturation 311 est constituée d'une languette 321 faisant saillie radialement vers l'extérieur à partir de la partie pleine 312.

Cette languette 321 peut, comme le montre la figure 10, s'étendre dans le même plan perpendiculaire à l'axe de rotation X-X' que la partie pleine 312.

Elle peut présenter de multiples formes: rectangulaire, ovale, allongée ... Elle peut obturer totalement ou partiellement l'espace périphérique 13.

La languette 321 est inclinée axialement à partir de la partie pleine 312 du côté des griffes 12, comme sur la figure 11. Elle présente deux pans, comme le relief axial 314 du premier mode de réalisation : un pan oblique solidaire de la partie pleine 312 et venant obturer l'espace entre les chanfreins 126 des deux griffes 12 entre lesquelles la languette 321 est engagée, et un pan axial prolongeant le pan oblique et venant obturer l'espace entre les faces extérieures 123 des griffes 12.

Dans une variante de réalisation représentée sur la figure 12, la partie d'obturation 311 peut être constituée d'une partie de support 320 disposée axialement dans le prolongement de l'espace périphérique 13.

Le ventilateur 30 peut comprendre une, deux ou plus de deux parties d'obturations 311.

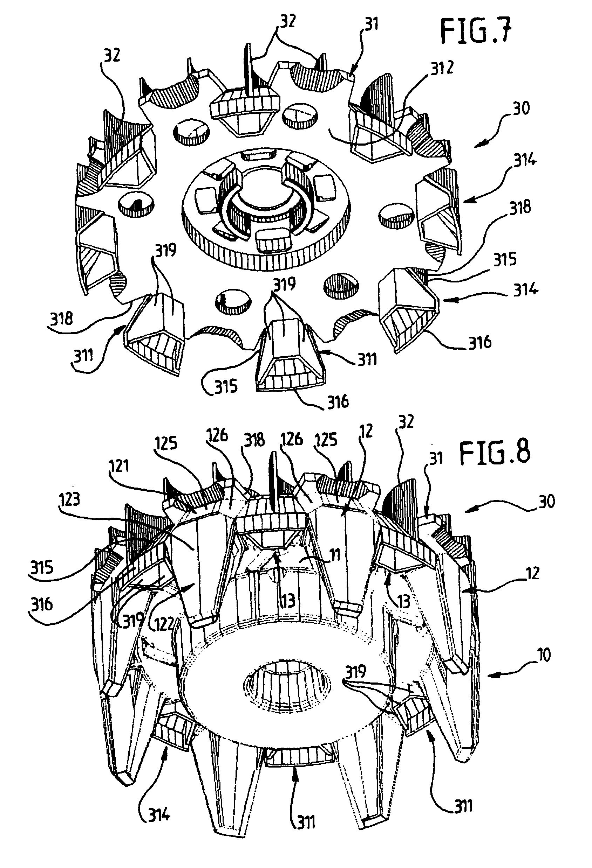

Ces parties d'obturation 311 peuvent être toutes du même type, c'est-à-dire toutes constituées d'une zone de la partie pleine 312, ou toutes constituées d'une languette 321, ou encore toutes constituées d'une partie de support de pale 320. Mais un même ventilateur peut également comprendre selon une caractéristique plusieurs parties d'obturations 311 de types différents, sans limitation dans les combinaisons possibles. Ainsi les languettes 321 peuvent être combinées avec les languettes des figures 3 et 7.

Le ventilateur 30 peut comprendre un second plateau 34 (figure 12) perpendiculaire à l'axe de rotation X-X', du même type que le plateau 31, et supportant lui aussi des pales 32.

Le second plateau 34 est plaqué sur la face axiale 111 du flasque 11 de la roue polaire 10, le plateau 31 étant plaqué d'un côté du second plateau 34 opposé à ladite face axiale 111. Chaque plateau peut être fixé sur le flasque 11 par exemple par soudage, le plateau le plus éloigné présentant des passages pour le soudage du plateau le plus proche sur le flasque 11 et vice versa.

Les parties pleines 312 des deux plateaux sont avantageusement de mêmes diamètres. Les parties de support de pales 320 du second plateau 34 sont décalées angulairement par rapport aux parties de support de pales du plateau 31, de telle sorte que les pales 32 du second plateau 34 viennent s'insérer entre les pales du plateau 31.

Alternativement, le plateau 31 peut être plaqué sur la face axiale 111 du flasque 11 de la roue polaire 10, le second plateau 34 étant plaqué d'un côté du plateau 31 opposé à ladite face axiale 111.

L'un au moins du plateau 31 et du second plateau 34 comprend une ou plusieurs parties d'obturation 311. Ces parties peuvent être de n'importe quel type.

Il est possible que le plateau 31 et le second plateau 34 comprennent chacun une ou plusieurs parties d'obturation 311.

Dans ce cas, un même espace périphérique 13 peut être obturée à l'aide de deux parties d'obturation complémentaires, l'une portée par le plateau et l'autre par le second plateau.

On comprend donc bien que l'ensemble rotorique décrit ci-dessus présente de multiples avantages.

Obturer un ou plusieurs des espaces périphériques 13 permet de diminuer les harmoniques créées par les roues polaires et de diminuer l'interaction acoustique entre l'ensemble rotorique et le stator coopérant avec cet ensemble.

Ceci est particulièrement important du fait que les ventilateurs les plus récents sont extrêmement silencieux. Ils génèrent un bruit très faible, qui ne couvre plus les harmoniques créées par les roues polaires.

On sait que les espaces périphériques séparant les griffes d'une même roue polaire sont des zones où se créent pendant la rotation de fortes turbulences, des décollements du fluide de la surface solide, et où naissent des différences de pressions importantes, ce qui entraîne la création du bruit aérodynamique et donc des harmoniques. L'obturation de ces espaces permet de diminuer significativement ces turbulences et de réduire le bruit dû à la rotation de la machine.

Cette obturation est réalisée de façon particulièrement commode et économique, puisque aucune pièce n'est ajoutée à l'ensemble rotorique. Ce sont des éléments déjà existants dans cet ensemble qui sont utilisés, découpés ou conformés différemment pour obturer les espaces périphériques.

Il est possible de réaliser l'obturation de façon dissymétrique sur une même roue polaire, c'est-à-dire de ne boucher que certains espaces périphériques, répartis de façon irrégulière, ou de boucher les espaces périphériques de façons différentes les uns des autres.

On répartit ainsi avantageusement les signaux harmoniques sur une plus large gamme.

Par ailleurs, il ressort clairement de la description ci-dessus qu'on peut obtenir une obturation en profondeur entre les griffes, ce qui augmente l'efficacité de la réduction des harmoniques.

Enfin, il est possible de supprimer les chanfreins 126 du fait de la présence des parties d'obturation 311. Ces chanfreins ont la même fonction que les parties d'obturation, à savoir diminuer le bruit produit par les roues polaires en rotation. Ils sont coûteux à usiner et peuvent affecter les performances électromagnétiques du rotor, en diminuant le passage du flux électromagnétique dans la griffe. On prolonge simplement dans ce cas la facette oblique 124 transversalement, des deux côtés.

Bien qu'on ait décrit un ensemble rotorique muni d'un seul ventilateur, cet ensemble peut être muni de deux ventilateurs sans sortir du cadre de l'invention. Ces deux ventilateurs sont fixés aux deux roues polaires opposées, et permettent d'obturer les espaces périphériques des deux roues.

Ainsi qu'on l'aura compris les reliefs axiaux 314 constituent une languette profilée de façon à s'adapter aux espaces intergriffes.

Les languettes 321, 314 permettent de boucher au moins partiellement les interstices entre les griffes de façon plus efficace que la variante de réalisation de la figure 12. En effet les formes des languettes 321 et 314 ne sont pas limitées par la forme des pales et par la fonction des pales, notamment lorsque celles-ci sont en tôle.

On appréciera que le rotor selon l'invention est avantageusement destiné à être monté dans un alternateur à ventilateur interne tel que décrit par exemple dans le document EP-A-0515 259. Un tel alternateur comporte un stator entourant un rotor à griffes.

Le rotor est solidaire de l'arbre 2 monté à rotation centralement par l'intermédiaire de roulements à billes, dont l'une est visible à la figure 1, dans un carter en deux parties appelés palier avant et palier arrière. Les paliers sont creux et présentent chacun un fond doté d'ouvertures, pour formation d'entrées d'air, et un rebord périphérique également doté d'ouvertures pour formation de sortie d'air. Les fonds des paliers sont globalement d'orientation transversale et portent centralement un roulement à billes pour le montage à rotation de l'arbre de support du rotor. Les fonds sont prolongés à leur périphérie extérieure chacun par le rebord périphérique globalement d'orientation axiale et épaulé pour montage du corps du stator portant le bobinage à pluralité d'enroulements de phase dont les chignons s'étendent en saillie axiale de part et d'autre du corps du stator et ce en dessous des ouvertures des rebords périphériques des paliers assemblés par exemple à l'aide de vis ou de tirants, pour formation du carter de logement du stator et du rotor. Le rotor porte à au moins l'une de ses extrémités axiales un ventilateur implanté radialement en dessous du chignon concerné. Le palier arrière porte au moins un porte balais, tandis qu'une poulie, solidaire de l'arbre de support du rotor, est adjacente au palier avant. Pour les autres constituants de l'alternateur on se reportera au document précité. Un pont redresseur, par exemple à diodes, est relié aux enroulements des phases. En variante ce pont redresseur est conformé pour former également un onduleur, comme décrit par exemple dans le document FR-A-2 745 444, pour injecter du courant dans les enroulements de phase du stator afin de faire fonctionner l'alternateur en moteur électrique notamment pour démarrer le moteur thermique du véhicule automobile, un tel alternateur tant appelé alterno-démarreur.

Dans tous les cas, lorsque l'arbre de support du rotor tourne, le ou les ventilateurs permettent de créer un courant d'air entre les ouvertures d'entrée et de sortie d'air traversant les chignons du bobinage du stator.

Bien entendu la présente invention n'est pas limitée aux exemples de réalisation décrits.

Ainsi le rebord 313 annulaire, en forme de couronne, de la figure 9 peut consister en une cible magnétique qui, en association avec au moins un capteur, assure un suivi magnétique de la rotation du rotor comme décrit dans le document FR A 2 857 171 auquel on se reportera pour plus de précisions, l'alternateur étant dans ce cas un alterno-démarreur.

Plus précisément la cible peut consister en un plasto-aimant en forme de couronne, qui est surmoulé sur le flasque du ventilateur comme dans les figures 2A et 2B du document précité.

Les trous, non référencés, que l'on voit à la figure 9 peuvent servir alors au démoulage.

Ainsi grâce à la cible et au capteur on peut injecter au bon moment du courant électrique dans l'enroulement de phase concerné du bobinage du stator comme décrit par exemple dans les documents FR-A-2 745 444, EP A 0 260 176 ET WO 01/69762.

Toutes les combinaisons sont possibles

## Revendications

1. Ensemble rotorique monté rotatif autour d'un axe de rotation (X-X') et comprenant deux roues polaires à griffes (10) séparées par un espacement axial et disposées en regard l'une de l'autre, chaque roue (10) comprenant un flasque (11) sensiblement perpendiculaire à l'axe (X-X') et des griffes (12) comprenant des bases (121) saillantes radialement à partir du bord extérieur du flasque (11) et prolongées, à la faveur de facettes obliques (125), par des dents (122) , d'une part,s'étendant axialement à partir du flasque (11) vers l'autre roue (10) et d'autre part, présentant des faces radialement extérieures (123) définissant le diamètre de l'ensemble rotorique et s'inscrivant dans un cylindre coaxial à l'axe X-X, le flasque (11) d'une des roues polaires comprenant une face d'extrémité axiale (111), dite face axiale, opposée à l'autre roue tandis que les griffes (12) d'une même roue (10) sont solidaires du flasque (11) par les bases (121) respectives mutuellement séparées par des espaces périphériques (13, l'ensemble comprenant au moins partiellement un ventilateur (30) plaqué sur la face axiale (111) du flasque (11) d'une des roues (10) opposée à l'autre roue (10), dans lequel le ventilateur (30) comprend un plateau (31) sensiblement perpendiculaire à l'axe (X-X') et fixé au flasque (11), et des pales (32) faisant saillie à partir du plateau (31) présentant une partie pleine (312) de forme annulaire, une partie dite d'obturation (311) du plateau (31) venant obturer axialement un des espaces périphérique (13), et dans lequel la partie pleine (312) présente un bord radialement extérieur et la partie d'obturation (311) porte un relief axial (314), d'une part, s'étendant à partir du plateau (31) entre les griffes (12) et, d'autre part, solidaire d'une face du plateau (31) tournée vers le flasque (11) et s'étendant à partir d'un point de cette face situé radialement à distance du bord extérieur de la partie pleine (312), ledit relief (314) comprenant un premier pan (315) s'étendant, à partir de la partie pleine (312) du plateau (31), en oblique, axialement et radialement et comportant,un second pan (316) prolongeant le premier pan (315) parallèlement à l'axe (X-X') et obturant au moins partiellement l'espace séparant les faces extérieures (123) des deux dents (122) en s'inscrivant dans le prolongement de la face extérieure de deux dents (122).

2. Ensemble rotorique selon la revendication 1, **caractérisé en ce que** le premier pan (315) présente une largeur plus faible près de la partie pleine (312) et plus grande à la jonction avec le deuxième pan (316).

3. Ensemble rotorique selon la revendication 2, **caractérisé en ce que** le relief axial (314) est conformé de façon à servir de clip de fixation du ventilateur (30) sur la roue polaire (10) correspondante.

4. Ensemble rotorique selon la revendication 2 ou 3, **caractérisé en ce que** le relief (314) présente la forme d'une languette portant une nervure axiale de rigidification (317) s'étendant à partir du plateau (31) le long des premier (315) et second (316) pans.

5. Ensemble rotorique selon la revendication 3 ou 4, **caractérisé en ce que** la partie pleine (312) présente un bord radialement extérieur dans lequel au moins une zone évidée (318) est creusée, la partie d'obturation (311) s'étendant à partir d'un fond de la zone évidée (318) en sorte que le premier pan (315) du relief axial (314) s'étend à partir du fond de la zone évidé (318) et est incliné à partir du fond vers l'extérieur.

6. Ensemble rotorique selon la revendication 5, **caractérisé en ce que** le relief (314) présente un caisson (319) de rigidification comportant un voile central (319) s'étendant parallèlement à l'axe X-X à partir du .fond de la zone évidée (318) et deux voiles latéraux (319), **en ce que** le voile central (319) est moins large que les premier et le second pans (315, 316) et **en ce que** les voiles latéraux (319) relient chacun l'un des bords latéraux du voile (319) à l'un des bords latéraux des premier et seconds pans (315, 316).

7. Ensemble rotorique selon l'une quelconque des revendications précédentes; **caractérisé en ce que** le ventilateur (30) est moulé et comprend une pale (32) s'étendant sur le premier pan (315) du relief (314).

8. ensemble rotorique selon l'une quelconque des revendications précédentes, **caractérisé en ce que** le ventilateur comprend plusieurs parties d'obturation (311) de type différent.

9. Ensemble rotorique selon l'une quelconque des revendications précédentes, **caractérisé en ce que** la partie pleine (312) présente un diamètre extérieur régal ou inférieur au diamètre de l'ensemble rotorique définit par le diamètre extérieur des faces radialement extérieures (123) des dents (122).

10. Ensemble rotorique selon la revendication 9 prise en combinaison avec la revendication 9, **caractérisé en ce que** la partie d'obturation (311) du plateau (31) fait saillie radialement vers l'extérieur à partir de la partie pleine (312).

11. Ensemble rotorique selon la revendication 10 prise en combinaison avec la revendication 9, **caractérisé en ce que** la partie d'obturation (311) du plateau (31) est constituée d'une languette (321) faisant saillie radialement vers l'extérieur à partir de la partie pleine (312) du plateau (31) du ventilateur (30).

12. Ensemble selon la revendication 11, **caractérisé en ce que** la languette (321) est inclinée axialement à partir de la partie pleine du côté des griffes (12)

13. Ensemble rotorique selon l'une quelconque des revendications 1 à 6 et 8 à 12, **caractérisé en ce que** le ventilateur (30) est en tôle pliée et **en ce que** le plateau (31) du ventilateur (30) comprend des parties (320) de support des pales (32) découpées à la périphérie de ce plateau (31), une de ces parties de support (320) constituant la partie d'obturation (311).

14. Ensemble rotorique selon la revendication 13, **caractérisé en ce que** le ventilateur (30) est en tôle pliée et **en ce que** le ventilateur (30) comprend un second plateau (34) plaqué sur le plateau (31) et supportant des pales (32).

15. Ensemble rotorique selon la revendication 14, **caractérisé en ce que** l'un du plateau (31) et du second plateau (34) comprend au moins une partie d'obturation (311). ,

16. Ensemble rotorique selon la revendication 15, **caractérisé en ce que** le plateau (31) est plaqué sur la face axiale (111) du flasque (11) de la roue polaire (10), le second plateau (34) étant plaqué d'un côté du plateau (31) opposé à ladite-face axiale (111).

17. Ensemble rotorique selon la revendication 14, **caractérisé en ce que** le second plateau (34) est plaqué sur la face axiale (111) du flasque (11) de la roue polaire (10), le plateau (31) étant plaqué d'un côté du second plateau (34) opposé à ladite face axiale (111).

18. Alternateur ou alterno-démarreur de véhicule automobile, comprenant un ensemble rotorique selon l'une quelconque des revendications 1 à 17.

## Claims

1. Rotor assembly mounted so that it can rotate about an axis of rotation (X-X') and comprising two claw pole rotor wheels (10) separated by an axial space and positioned facing one another, each rotor wheel (10) comprising a flange (11) substantially perpendicular to the axis (X-X') and claws (12) comprising bases (121) projecting radially from the exterior edge of the flange (11) and extended, via oblique facets (125), by teeth (122), on the one hand, extending axially from the flange (11) towards the other rotor wheel (10) and, on the other hand, having radially outer faces (123) defining the diameter of the rotor assembly and inscribable inside a cylinder coaxial with the axis (X-X'), the flange (11) of one of the pole rotor wheels comprising an axial end face (111), called the axial face, opposite the other rotor wheel whereas the claws (12) of one and the same rotor wheel (10) are secured to the flange (11) by the respective baces (121) separated from one another by peripheral spaces (13), the assembly comprising at least partially a fan (30) held firmly against the axial face (111) of the flange (11) of one of the rotor wheels (10) that is the opposite face to the other rotor wheel (10), in which the fan (30) comprises a plate (31) substantially perpendicular to the axis (X-X') and fixed to the flange (11), and blades (32) projecting from the plate (31) having a solid part (312) of annular shape, a part of the plate (31) known as the blanking part (311) axially blanking off one of the peripheral spaces (13), and in which the solid part (312) has a radially outer edge and the blanking part (311) has an axial relief (314), on the one hand extending from the plate (31) between the claws (12) and, on the other hand, secured to a face of the plate (31) that faces towards the flange (11) and extending from a point on this face that is situated radially distant from the outer edge of the solid part (312), the said relief (314) comprising a first panel (315) extending, from the solid part (312) of the plate (31) obliquely, axially and radially and comprising a second panel (316) extending the first panel (315) parallel to the axis (X-X') and at least partially blanking off the space separating the outer faces (123) of the two teeth (122), being inscribable in the continuation of the outer face of two teeth (122).

2. Rotor assembly according to Claim 1, **characterized in that** the first panel (315) is of a width that is smaller near the solid part (312) and larger at the junction with the second panel (316).

3. Rotor assembly according to Claim 2, **characterized in that** the axial relief (314) is shaped to act as clip for fixing the fan (30) to the corresponding pole rotor wheel (10).

4. Rotor assembly according to Claim 2 or 3, **characterized in that** the relief (314) takes the form of a tab bearing a stiffening axial rib (317) extending from the plate (31) along the first (315) and second (316) panels.

5. Rotor assembly according to Claim 3 or 4, **characterized in that** the solid part (312) has a radially outer edge in which at least one recessed region (318) is hollowed, the blanking part (311) extending from a closed end of the hollowed-out region (318) in such a way that the first panel (315) of the axial relief (314) extends from the closed end of the hollowed-out region (318) and is inclined from the closed end outwards.

6. Rotor assembly according to Claim 5, **characterized in that** the relief (314) has a stiffening box section (319) comprising a central web (319) running parallel to the axis X-X from the closed end of the hollowed-out region (318) and two lateral webs (319), **in that** the central web (319) is not as wide as the first and second panels (315, 316), and **in that** the lateral webs (319) each connect one of the lateral edges of the web (319) to one of the lateral edges of the first and second panels (315, 316).

7. Rotor assembly according to any one of the preceding claims, **characterized in that** the fan (30) is moulded and has a blade (32) extending on the first panel (315) of the relief (314).

8. Rotor assembly according to any one of the preceding claims, **characterized in that** the fan comprises several blanking parts (311) of different types.

9. Rotor assembly according to any one of the preceding claims, **characterized in that** the solid part (312) has an outside diameter equal to or less than the diameter of the rotor assembly defined by the outside diameter of the radially outer faces (123) of the teeth (122).

10. Rotor assembly according to Claim 9 considered in combination with Claim 9, **characterized in that** the blanking part (311) of the plate (31) projects radially outwards from the solid part (312).

11. Rotor assembly according to Claim 10 considered in combination with Claim 9, **characterized in that** the blanking part (311) of the plate (31) consists of a tab (321) projecting radially outwards from the solid part (312) of the plate (31) of the fan (30).

12. Assembly according to Claim 11, **characterized in that** the tab (321) is inclined axially from the solid part on the same side as the claws (12).

13. Rotor assembly according to any one of Claims 1 to 6 and 8 to 12, **characterized in that** the fan (30) is made of bent sheet metal and **in that** the plate (31) of the fan (30) comprises parts (320) for supporting the blades (32), which parts are cut at the periphery of this plate (31), one of these support parts (320) constituting the blanking part (311).

14. Rotor assembly according to Claim 13, **characterized in that** the fan (30) is made of bent sheet metal and **in that** the fan (30) comprises a second plate (34) pressed firmly against the plate (31) and supporting blades (32).

15. Rotor assembly according to Claim 14, **characterized in that**, out of the plate (31) and the second plate (34), one comprises at least one blanking part (311).

16. Rotor assembly according to Claim 15, **characterized in that** the plate (31) is pressed firmly against the axial face (111) of the flange (11) of the pole rotor wheel (10), the second plate (34) being pressed firmly against one side of the plate (31) that is the opposite side to the said axial face (111).

17. Rotor assembly according to Claim 14, **characterized in that** the second plate (34) is pressed firmly against the axial face (111) of the flange (11) of the pole rotor wheel (10), the plate (31) being pressed firmly against one side of the second plate (34) that is the opposite side to the said axial face (111).

18. Motor vehicle alternator or alternator-starter comprising a rotor assembly according to any one of Claims 1 to 17.

## Patentansprüche

1. Rotoreinheit, die um eine Drehachse (X-X') drehbar montiert ist und zwei Polräder mit Klauen (10) enthält, die durch einen axialen Abstand getrennt und einander gegenüber angeordnet sind, wobei jedes Rad (10) einen Flansch (11) im Wesentlichen lotrecht zur Achse (X-X') und Klauen (12) enthält, die Basen (121) enthalten, welche radial ausgehend vom Außenrand des Flanschs (11) vorstehen, und dank schräger Facetten (125) einerseits durch Zähne (122) verlängert werden, die sich axial ausgehend vom Flansch (11) zum anderen Rad (10) erstrecken, und andererseits radial äußere Seiten (123) aufweisen, die den Durchmesser der Rotoreinheit definieren und in einem zur Achse X-X' koaxialen Zylinder liegen, wobei der Flansch (11) eines der Polräder eine axiale Endseite (111) enthält, axiale Seite genannt, die dem anderen Rad gegenüberliegt, während die Klauen (12) eines gleichen Rads (10) durch die Basen (121) fest mit dem Flansch (11) verbunden sind, die durch Umfangsräume (13) voneinander getrennt sind, wobei die Einheit zumindest teilweise einen Lüfter (30) enthält, der auf die axiale Seite (111) des Flanschs (11) eines der Räder (10) entgegengesetzt zum anderen Rad (10) aufgelegt ist, wobei der Lüfter (30) eine Grundplatte (31) im Wesentlichen lotrecht zur Achse (X-X') und am Flansch (11) befestigt und Schaufeln (32) enthält, die ausgehend von der Grundplatte (31) vorstehen, die einen ringförmigen massiven Teil (312) besitzt, wobei ein so genannter Verschlussteil (311) der Grundplatte (31) axial einen der Umfangsräume (13) verschließt, und wobei der massive Teil (312) einen radial äußeren Rand und der Verschlussteil (311) ein axiales Relief (314) trägt, das sich einerseits ausgehend von der Grundplatte (31) zwischen den Klauen (12) erstreckt und andererseits fest mit einer Seite der Grundplatte (31) verbunden ist, die zum Flansch (11) weist, und sich ausgehend von einem Punkt dieser Seite erstreckt, der sich radial in Abstand zum Außenrand des massiven Teils (312) befindet, wobei das Relief (314) eine erste Seitenfläche (315), die sich ausgehend vom massiven Teil (312) der Grundplatte (31) schräg axial und radial erstreckt, und eine zweite Seitenfläche (316) enthält, die die erste Seitenfläche (315) parallel zur Achse (X-X') verlängert und mindestens teilweise den Raum verschließt, der die Außenseiten (123) der zwei Zähne (122) trennt, indem sie in der Verlängerung der Außenseite von zwei Zähnen (122) liegt.

2. Rotoreinheit nach Anspruch 1, **dadurch gekennzeichnet, dass** die erste Seitenfläche (315) eine geringere Breite nahe dem massiven Teil (312) und eine größere an der Verbindung mit der zweiten Seitenfläche (316) hat.

3. Rotoreinheit nach Anspruch 2, **dadurch gekennzeichnet, dass** das axiale Relief (314) gestaltet ist, um als Befestigungsclip für den Lüfter (30) auf dem entsprechenden Polrad (10) zu dienen.

4. Rotoreinheit nach Anspruch 2 oder 3, **dadurch gekennzeichnet, dass** das Relief (314) die Form einer Zunge hat, die eine axiale Versteifungsrippe (317) trägt, die sich ausgehend von der Grundplatte (31) entlang der ersten (315) und zweiten (316) Seitenfläche erstreckt.

5. Rotoreinheit nach Anspruch 3 oder 4, **dadurch gekennzeichnet, dass** der massive Teil (312) einen radial äußeren Rand hat, in dem mindestens eine ausgehöhlte Zone (318) ausgespart ist, wobei der Verschlussteil (311) sich ausgehend von einem Boden der ausgehöhlten Zone (318) erstreckt, so dass die erste Seitenfläche (315) des axialen Reliefs (314) sich ausgehend vom Boden der ausgehöhlten Zone (318) erstreckt und ausgehend vom Boden nach außen geneigt ist.

6. Rotoreinheit nach Anspruch 5, **dadurch gekennzeichnet, dass** das Relief (314) ein Versteifungsgehäuse (319) besitzt, das eine zentrale Abdeckung (319), die sich parallel zur Achse X-X' ausgehend vom Boden der ausgehöhlten Zone (318) erstreckt, und zwei seitliche Abdeckungen (319) aufweist, dass die mittlere Abdeckung (319) weniger breit ist als die erste und die zweite Seitenfläche (315, 316), und dass die seitlichen Abdeckungen (319) je einen der Seitenränder der Abdeckung (319) mit einem der Seitenränder der ersten und zweiten Seitenflächen (315, 316) verbinden.

7. Rotoreinheit nach einem der vorhergehenden Ansprüche, **dadurch gekennzeichnet, dass** der Lüfter (30) geformt ist und eine Schaufel (32) aufweist, die sich auf der ersten Seitenfläche (315) des Reliefs (314) erstreckt.

8. Rotoreinheit nach einem der vorhergehenden Ansprüche, **dadurch gekennzeichnet, dass** der Lüfter mehrere Verschlussteile (311) unterschiedlichen Typs enthält.

9. Rotoreinheit nach einem der vorhergehenden Ansprüche, **dadurch gekennzeichnet, dass** der massive Teil (312) einen Außendurchmesser gleich dem oder kleiner als der Durchmesser der Rotoreinheit aufweist, der durch den Außendurchmesser der radial äußeren Seiten (123) der Zähne (122) definiert wird.

10. Rotoreinheit nach Anspruch 9 in Kombination mit Anspruch 9, **dadurch gekennzeichnet, dass** der Verschlussteil (311) der Grundplatte (31) ausgehend vom massiven Teil (312) radial nach außen vorsteht.

11. Rotoreinheit nach Anspruch 10 in Kombination mit Anspruch 9, **dadurch gekennzeichnet, dass** der Verschlussteil (311) der Grundplatte (31) aus einer Zunge (321) besteht, die ausgehend vom massiven Teil (312) der Grundplatte (31) des Lüfters (30) radial nach außen vorsteht.

12. Einheit nach Anspruch 11, **dadurch gekennzeichnet, dass** die Zunge (321) ausgehend vom massiven Teil auf der Seite der Klauen (12) axial geneigt ist.

13. Rotoreinheit nach einem der Ansprüche 1 bis 6 und 8 bis 12, **dadurch gekennzeichnet, dass** der Lüfter (30) aus Falzblech ist, und dass die Grundplatte (31) des Lüfters (30) Stützteile (320) der Schaufeln (32) enthält, die am Umfang dieser Grundplatte (31) ausgeschnitten sind, wobei einer dieser Stützteile (320) den Verschlussteil (311) bildet.

14. Rotoreinheit nach Anspruch 13, **dadurch gekennzeichnet, dass** der Lüfter (30) aus Falzblech ist, und dass der Lüfter (30) eine zweite Grundplatte (34) enthält, die auf die Grundplatte (31) gedrückt ist und Schaufeln (32) trägt.

15. Rotoreinheit nach Anspruch 14, **dadurch gekennzeichnet, dass** eine, die Grundplatte (31) oder die zweite Grundplatte (34), mindestens einen Verschlussteil (311) enthält.

16. Rotoreinheit nach Anspruch 15, **dadurch gekennzeichnet, dass** die Grundplatte (31) auf die axiale Seite (111) des Flanschs (11) des Polrads (10) gedrückt ist, während die zweite Grundplatte (34) auf eine Seite der Grundplatte (31) entgegengesetzt zur axialen Seite (111) gedrückt ist.

17. Rotoreinheit nach Anspruch 14, **dadurch gekennzeichnet, dass** die zweite Grundplatte (34) auf die axiale Seite (111) des Flanschs (11) des Polrads (10) gedrückt ist, während die Grundplatte (31) auf eine Seite der zweiten Grundplatte (34) entgegengesetzt zur axialen Seite (111) gedrückt ist.

18. Drehstromgenerator oder Starter-Generator eines Kraftfahrzeugs, der eine Rotoreinheit nach einem der Ansprüche 1 bis 17 enthält.
